# EUROPÄISCHE PATENTSCHRIFT

(11) **EP 2 422 396 B1**
(45) Veröffentlichungstag und Bekanntmachung des Hinweises auf die Patenterteilung: **23.04.2014**
(21) Anmeldenummer: 09775865.0
(22) Anmeldetag: 24.04.2009
(51) Int. Cl.: H01M 8/20, H01M 8/24, H01M 4/76, H01M 4/86, H01M 10/39, H01M 8/18

(54) **TUBULÄRE VORRICHTUNG ZUR VERWENDUNG BEI DER ENERGIEWANDLUNG**
TUBULAR APPARATUS FOR USE IN ENERGY CONVERSION
DISPOSITIF TUBULAIRE DESTINÉ À ÊTRE UTILISÉ POUR LA CONVERSION D'ÉNERGIE

(43) Veröffentlichungstag der Anmeldung: 29.02.2012
(73) Patentinhaber: LEONARDIS-STIFTUNG, 70192 Stuttgart (DE)
(72) Erfinder: RENNEBECK, Klaus, 73240 Wendlingen (DE); HILDENBRAND, Bernd, 79235 Vogtsburg (DE)
(74) Vertreter: Nettinger, Manuela Gertrud
(86) Internationale Anmeldenummer: PCT/DE2009/000573
(87) Internationale Veröffentlichungsnummer: WO 2010/121581

(56) Entgegenhaltungen:
- SU-A1- 855 795
- US-A- 4 202 936
- US-A- 4 414 299
- US-A1- 2006 183 016
- US-A1- 2008 241 625

## Beschreibung

Die Erfindung betrifft eine tubuläre Vorrichtung zum Einsatz bei der Wandlung chemischer in elektrische Energie. Derartige Energieumwandlungen finden beispielsweise in Batterien oder Brennstoffzellen statt.

Feststoffbatterien und Brennstoffzellen finden zunehmend Verbreitung bei der Bereitstellung elektrischer Energie für verschiedene Einsatzgebiete. Um eine optimale Funktion und einen hohen Wirkungsgrad zu gewährleisten, ist es nötig, dass die funktionalen Teile einer solchen Vorrichtung in Bezug auf ihr Zusammenwirken optimal ausgerichtet sind. In bestimmten Anwendungsgebieten werden spezielle Eigenschaften von Batterien oder Brennstoffzellen genannt, wie z.B. Austauschbarkeit einzelner funktionalen Teile, wie z.B. Elektrolyt oder Elektrodenmaterial.

Aus der US 2006/0183016 A1 ist eine Vanadiumbromid-RedoxBatterie bekannt, welche ein röhrenförmiges Element aus einem Isolierstoff aufweist, in dessen Innenraum eine Elektrode aufgenommen ist.

Der Erfindung liegt die Aufgabe zugrunde, eine Vorrichtung zum Einsatz bei der Wandlung chemischer in elektrische Energie anzugeben, welche die Einsatzmöglichkeiten derartiger Vorrichtungen verbessern sollen.

Hierzu wird eine tubuläre Vorrichtung zum Einsatz bei der Wandlung chemischer in elektrische Energie, angegeben, welche folgendes aufweist: ein erstes röhrenförmiges, geschlossenes Element aus einem Isolierstoff, in dessen Innenraum eine Elektrode aufgenommen ist; und ein zweites röhrenförmiges Element aus einem Isolierstoff, wobei das zweite röhrenförmige Element das erste röhrenförmige Element umgibt, so das zwischen dem ersten und dem zweiten röhrenförmigen Element ein geschlossener Hohlraum besteht, in welchen ein textiles Element eingefügt ist, das sich um den Umfang des ersten röhrenförmigen Elements erstreckt, wobei der Innendurchmesser D_{I2} des zweiten röhrenförmigen Elements kleiner ist als der Außendurchmesser D_{AE} der Einheit aus erstem röhrenförmigen Element und textilem Element im entspannten Zustand des textilen Elements.

Das Merkmal, wonach der Innendurchmesser des zweiten röhrenförmigen Elements kleiner ist als der Außendurchmesser .der Einheit aus erstem röhrenförmigen Element und textilem Element im entspannten Zustand des textilen Elements bedeutet, dass das textile Element zwischen den beiden röhrenförmigen Elementen eine Pressung erfährt, so dass ein elastischer Druck auf die Außenwand des ersten röhrenförmigen Elements und auf die Innenwand des zweiten röhrenförmigen Elements ausgeübt wird. Dies hat zur Folge, dass ein guter Kontakt zwischen den funktionalen Elementen der tubulären Vorrichtung gehalten wird. Eine solche Eigenschaft ist bei der Energieerzeugung mittels Batterien und Brennstoffzellen wichtig, da hierdurch der Wirkungsgrad der Vorrichtung verbessert wird.

Der Querschnitt der röhrenförmigen Elemente ist nicht auf die Kreisform beschränkt. Vielmehr können verschiedene polygonale Formen für den Querschnitt gewählt werden, z.B. regelmäßige Polygone wie Dreieck, Quadrat, Fünfeck, Sechseck, oder, allgemeiner ausgedrückt, ein n-Eck, wobei n eine natürliche Zahl größer oder gleich drei ist. In diesem Zusammenhang ist anzumerken, dass sich im Fall eines polygonalen Querschnitts der röhrenförmigen Elemente die jeweiligen Werte für die Durchmesser auf die gleichwertigen hydraulischen Durchmesser beziehen.

Das erste, innere röhrenförmige Element und das zweite röhrenförmige Element bilden einen Hohlraum, der dafür ausgelegt ist, beim Einsatz der tubulären Vorrichtung für die Energiewandlung, einen festen oder flüssigen Elektrolyten aufzunehmen. Das beiden röhrenförmigen Elemente wirken somit als Separatoren, die dafür sorgen, dass Degradation der Elektroden verringert werden kann. Je nach Art der Batterie oder Brennstoffzelle, in der die tubuläre Vorrichtung zum Einsatz kommt, weist das Material mindestens eines der röhrenförmigen Elemente die Fähigkeit zur Ionenleitung (d.h. Ermöglichung des Durchtritts von Anionen oder Kationen) durch die Wandstärke hindurch.

Darüber hinaus dient der Hohlraum der Aufnahme des textilen Elements. Dieses erstreckt sich in Umfangsrichtung des ersten röhrenförmigen Elements im Wesentlichen über 360°, d.h. über dem gesamten Umfang des ersten röhrenförmigen Elements. Unter dem Ausdruck "im Wesentlichen" ist in diesem Zusammenhang zu verstehen, dass sich das textile Element mindestens 90% des Umfangs bedeckt. Aufgrund der textilen Eigenschaften, welche auch Elastizität einschließen, ist das textile Element als Stoßdämpfer zum Verhindern einer Beschädigung von Bestandteilen der Vorrichtung wirksam und als statischer Durchflußmischer. Darüber hinaus sorgt das textile Element auch für einen Anpressdruck einzelner funktionaler Elemente der Vorrichtung gegeneinander.

Als Isolierstoff, aus dem die röhrenförmigen Elemente hergestellt sind, können beispielsweise Zeolith oder Zirkoniumoxid eingesetzt werden. Darüber hinaus können auch geeignete nicht leitende Polymere verwendet werden. Es ist möglich, die Röhren entweder in einem Extrusionsverfahren und anschließendem Brennen oder isostatisches Pressen ohne anschließendes Brennen herzustellen. Mit den genannten Herstellungsverfahren können röhrenförmige Elemente mit Wandstärken zwischen 100µm bis 150 nano und 1,5mm erzeugt werden, wie sie im Rahmen von Ausführungsformen der Erfindung gewünscht sind. Befindet sich die gewünschte Wandstärke in einem unteren Bereich der genannten Spanne, so können gegebenenfalls Maßnahmen ergriffen werden, um die Stabilität des röhrenförmigen Elements zu erhöhen. Unter diesen Maßnahmen ist beispielsweise das sogenannte "Plissieren" zu nennen. Hierbei wird die Oberfläche des röhrenförmigen Elements so ausgestaltet, dass sie in Querschnittsansicht eine zahnradförmige Kontur aufweist, nämlich dem Edelweishaareffekt, als UV-Licht-Führer und Ozonführer für die Luftelektrode.

Was die Größe der tubulären Vorrichtung betrifft, so kann gemäß einer Ausführungsform der Außendurchmesser D_{A2} des zweiten röhrenförmigen Elements weniger als 10 mm betragen. Das röhrenförmige Element kann somit auch in geringer Größe hergestellt werden, was seine Einsatzmöglichkeiten erweitert.

Wie bereits erwähnt, ist der Innenraum des ersten röhrenförmigen Elements dafür gedacht, eine der Elektroden für die chemische Reaktion aufzunehmen. Dabei kann die Elektrode in verschiedenen Formen ausgestaltet sein.

Gemäß einer Ausführungsform umfasst die Elektrode ein längliches Element, dessen Längsachse sich parallel zur Längsachse der röhrenförmigen Elemente erstreckt, wobei das längliche Element radial zu seiner Längsachse verlaufende elastische Lamellen oder Borsten aufweist, die in Druckverbindung mit dem ersten röhrenförmigen Element stehen. Ähnlich wie das textile Element im Hohlraum zwischen den beiden Röhren aus Isolierstoff dient auch diese Ausgestaltung der Elektrode dazu, einen Druck auf ein funktionales Element, in diesem Fall das erste, innere röhrenförmige Element, auszuüben.

Das längliche Element kann beispielsweise aus mindestens einem der folgenden Materialien hergestellt sein: SiC, Titan, Reinstsilizium, das auf der Oberfläche mit bordotiertem Diamant beschichtet ist, Eisen, elektrisch leitende Polymere, Zink, VB₂, Kupfer, Mangan, Kobalt, Tantal, Graphit, Kohle. Das längliche Element kann denjenigen Teil der Elektrode darstellen, mit dessen Hilfe die Spannung abgegriffen wird.

Die Borsten des länglichen Elements der Elektrode sind gemäß einer Ausführungsform aus Hohlfasern hergestellt, welche einen Außendurchmesser zwischen 9µm und 140µm aufweisen. Derartig feine Hohlprofile lassen sich beispielsweise in einem Extrusionsverfahren herstellen.

Neben dem erwähnten länglichen Element kann die Elektrode einen flüssigen oder pulverförmigen Elektronenleiter als aktives Elektrodenmaterial aufweisen, der den Innenraum des ersten röhrenförmigen Elements füllt. Dabei kann es sich bei dem flüssigen Elektronenleiter beispielsweise um Vanadiumbromid VBr handeln, wohingegen der feste Elektronenleiter Vanadiumborid VB₂ sein kann.

Gemäß einer alternativen Ausführungsform kann das aktive Elektrodenmaterial auch als Rohrelement ausgebildet sein, welches zwischen das längliche Element der Elektrode und das erste röhrenförmige Element aus Isolationsmaterial gesetzt ist. In diesem Fall ist vorzugsweise zwischen dem ersten röhrenförmigen Element und dem Rohrelement, das Bestandteil der Elektrode ist, ein weiteres textiles Element gesetzt, das bezüglich seines Aufbaus und seiner Materialien identisch mit dem textilen Element sein kann, welches sich zwischen den beiden röhrenförmigen Elementen aus Isolationsmaterial befindet. Auch durch dieses weitere textile Element werden sowohl eine Schutzfunktion gegen mechanische Beschädigung als auch die Gewährleistung eines elastischen Anpressdrucks der funktionalen Elemente gewährleistet.

Gemäß einer Ausführungsform der Erfindung handelt es sich bei dem textile Element um ein Gewirk, Gestrick, Filz, Vlies oder Gewebe aus Hohlfasern .Hierbei ist anzumerken, dass das Vlies, Gewirk oder Gestrick generell aus Vollfasern oder Hohlfasern ausgebildet sein kann. In Bezug auf die Elastizität des aus den Fasern aufgebauten textilen Elements weisen jedoch Hohlfasern im Allgemeinen eine höhere Biegesteifigkeit auf als Vollfasern gleichen Durchmessers und gleichen Materials und werden diesbezüglich als vorteilhaft angesehen. Im Gegensatz dazu sind Vollfasern leichter zu erzeugen und damit preiswerter in der Herstellung.

Die im Rahmen von Ausführungen der Erfindung einsetzbaren Fasern oder Hohlfasern können einen Durchmesser im Millimeterbereich oder darunter besitzen. Es kann sich jedoch auch um Fasern handeln, deren äußerer Durchmesser einige Mikrometer oder Nanometer beträgt (Mikro- bzw. Nanofasern). Als geeignet haben sich besonders Hohlfasern mit einem Außendurchmesser zwischen 9 und 140µm erwiesen.

In dem Hohlraum ist bei der Verwendung der tubulären Vorrichtung gemäß Ausführungsformen der Erfindung ein Elektrolyten in fester oder flüssiger Form enthalten. Da der Elektrolyt aufgrund der speziellen Ausgestaltung von den Elektroden getrennt ist, sind diese vor Korrosion durch die Elektrolytmaterialien geschützt.

Was die für den Elektrolyt einsetzbaren Materialien und Verbindungen betrifft, so kann er gemäß Ausführungsformen der Erfindung eine der folgenden Verbindungen in wässriger Lösung enthalten:: Kohlenstoffdisulfid (CS2), Kalilauge, Bromide, insbesondere Lithiumbromid (LiBr), Ammoniak, Methylalkohol (CH30H), Tetrahydrofuran (THF).

Es ist in diesem Zusammenhang anzumerken, dass die bei der Energieumwandlung von chemischer in elektrische Energie entstehende Abwärme zur Fahrzeugklimatisierung eingesetzt werden kann. In diesem Fall übernimmt der flüssige Elektrolyt zusätzlich die Funktion eines Kältemittels, das über Wärmetauscher als Wärmepumpe den Fahrgastinnenraum eines Kraftfahrzeuges klimatisiert.

Die bislang geschilderten Ausführungsformen mit zwei röhrenförmigen Elementen aus Isolationsmaterial sind im Fall von Anwendungen ausreichend, bei denen lediglich zwei Hohlräume benötigt werden: der erste für die erste Elektrode und deren aktives Elektrodenmaterial und der zweite für die Aufnahme und getrennte Lagerung des Elektrolyten. Dieser Fall ist beispielsweise dann gegeben, wenn als aktives Elektrodenmaterial für eine zweite Elektrode Sauerstoff bzw. Umgebungsluft auch mit UV-Licht verwendet wird. Es ist dann nicht nötig, einen weiteren geschlossenen Hohlraum auszuführen.

Bei Ausführungsformen, bei denen ein weiterer Hohlraum für die zweite Elektrode und deren aktives Elektrodenmaterial benötigt wird, kann ein drittes röhrenförmiges Element aus einem Isolierstoff vorhanden sein, wobei das dritte röhrenförmige Element das zweite röhrenförmige Element umgibt, so dass zwischen dem zweiten und dem dritten röhrenförmigen Element ein Hohlraum besteht, in welchen ein textiles Element eingefügt ist, das sich um den Umfang des zweiten röhrenförmigen Elements erstreckt, wobei der Innendurchmesser D_{I3} des dritten röhrenförmigen Elements kleiner ist als der Außendurchmesser D_{AE} der Einheit aus dem zweiten röhrenförmigen Element und textilem Element im entspannten Zustand des textilen Elements.

Aufbau und Materialien des weiteren textilen Elements können denjenigen des erstgenannten textilen Elements entsprechen. In ähnlicher Weise können Aufbau und Materialien des ersten, zweiten und dritten röhrenförmigen Elements einander entsprechen.

In zahlreichen Anwendungen ist es erwünscht, Funktionsteile einer Batterie oder Brennstoffzelle schnell und unkompliziert ersetzen zu können. Hierfür ist die Röhrenform der gesamten tubulären Vorrichtung, wie sie in den Ausführungsformen der Erfindung angegeben ist, besonders geeignet, da die Konstruktion im Gegensatz zu bipolaren plattenförmigen Batterien oder Brennstoffzellen stabiler und weniger zerbrechlich ist. Ferner bringt die Röhrenform strömungstechnische Vorteile im Hinblick auf das Ausbringen der zu ersetzenden funktionalen Elemente.

Zu dem vorstehend geschilderten Zweck kann an mindestens einem längsseitigen Ende des Innenraums des ersten röhrenförmigen geschlossenen Elements eine verschließbare Öffnung ausgebildet sein, welche das Ersetzen oder das Regenerieren der Elektrode ermöglicht.

In ähnlicher Weise kann an mindestens einem längsseitigen Ende des Holhlaraums zwischen des ersten röhrenförmigen geschlossenen Elements und dem zweiten röhrenförmigen Element eine verschließbare Öffnung ausgebildet sein, welche das Ersetzen oder das Regenerieren des Elektrolyten ermöglicht, der vorzugsweise wasserlöslich ist.

Weitere Vorteile und Merkmale der Erfindung gehen aus der nachfolgenden Beschreibung exemplarischer Ausfuhrungsfbrmen derselben hervor, welche nachstehend mit Bezug auf die beigefügten Zeichnungen gegeben wird.

In den Zeichnungen zeigen:
Figur 1 eine erste Ausführungsform einer tubulären Vorrichtung zur Verwendung bei der Wandlung chemischer in elektrische Energie im Querschnitt;
Figur 2 eine weitere Ausführungsform tubulären Vorrichtung zur Verwendung bei der Wandlung chemischer in elektrische Energie im Querschnitt. Und
Figur 3 die Ausführungsform von Figur 2 im Längsschnitt.

In den verschiedenen Figuren sind analoge Elemente mit den gleichen Bezugszeichen versehen.

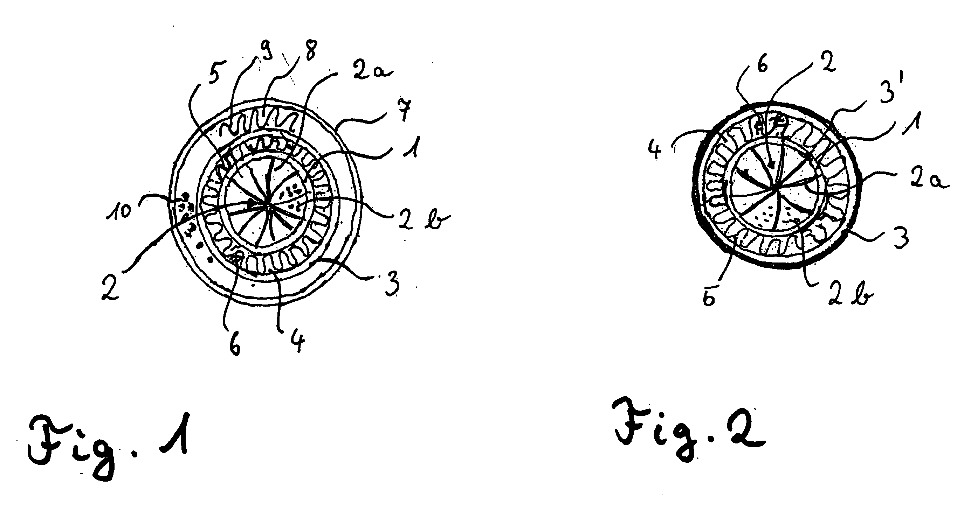

In Figur 1 ist im Querschnitt eine erste Ausführungsform einer tubulären Vorrichtung zur Verwendung bei der Wandlung chemischer in elektrische Energie gezeigt. Die tubuläre Vorrichtung, bei der es sich um eine Redoxbatterie des Eisen-Borid-Typs handelt umfasst ein erstes röhrenförmiges Element 1, das sich mit seiner Längsachse senkrecht zur Bildebene erstreckt. Das erste röhrenförmige Element 1 ist beispielsweise aus Zirkoniumoxid hergestellt.

Im Inneren des ersten röhrenförmigen Elements 1 ist ein geschlossener Raum definiert, in dem eine Elektrode aufgenommen ist. Die Elektrode umfasst hier ein längliches Element 2, das beispielsweise Kohlenstoff und/oder Siliciumcarbid enthalten kann. Die Längsachse des länglichen Elements 2 erstreckt sich parallel zu derjenigen des röhrenförmigen Elements 1 und somit senkrecht zur Bildebene. Von der Längsachse des länglichen Elements 2 aus erstrecken sich Borsten 2a im Wesentlichen radial nach außen bis sie das erste röhrenförmige Element 2 von innen berühren. Anstelle der Borsten 2a können auch Lamellen eingesetzt werden, die sich ebenfalls im Wesentlichen radial nach außen erstrecken, aber zusätzlich eine Ausdehnung senkrecht zur Bildebene aufweisen.

Mit dem Ausdruck "im Wesentlichen" ist im Zusammenhang mit der vorstehend bezeichneten radialen Ausrichtung gemeint, dass die Borsten aufgrund des Merkmals, dass der Innendurchmesser D_{I1} des ersten röhrenförmigen Elements 1 kleiner ist als die radiale Länge der Borsten 2a, so dass die Borsten 2a leicht gebogen sind und einen Druck radial nach außen auf das erste röhrenförmige Element ausüben. Das längliche Element 2a als Bestandteil der Elektrode dient dem Ableiten des erzeugten Stromes nach außen.

Darüber hinaus weist die Elektrode noch einen aktiven Bestandteil auf, im vorliegenden Fall beispielsweise einen pulverförmigen Elektronenleiter 2b, der hier durch einige Punkte angedeutet ist. Tatsächlich fiillt der pulverförmige Elektronenleiter 2b, der beispielsweise hier FeO₄ oder Fe₂O₃ sein kann, aber den gesamten Innenraum aus und umgibt das längliche Element 2 und steht mit diesem in Kontakt.

Gemäß einer alternativen Ausführungsform kann das aktive Material der Elektrode bzw. der Elektronenleiter auch in Form eines Rohrelements ausgebildet sein, das sich parallel zum ersten röhrenförmigen Element 1 und innerhalb desselben erstreckt. In diesem Fall befindet sich vorzugsweise ein Gewirk, Gestrick, ein Filz, Vlies oder Gewebe zwischen dem Rohrelement der Elektrode und dem ersten röhrenförmigen Element 1. Bei der beschriebenen alternativen Ausführungsform berühren die Borsten 2a des länglichen Elements 2 der Elektrode nicht mehr das erste röhrenförmige Element 1, sondern stattdessen das Rohrelement, welches das aktive Elektrodenmaterial darstellt.

Nunmehr zurück mit Bezug auf Figur 1 umfasst die dargestellte Ausführungsform ein zweites röhrenförmiges Element 3, das bezüglich Material und Aufbau gleich dem ersten röhrenförmigen Element 1 sein kann. Zwischen dem ersten röhrenförmigen Element 1 und dem zweiten röhrenförmigen Element 3 ist ein Hohlraum 4 ausgebildet, in dem ein textiles Element 5 enthalten ist. Das textile Element 5 ist in der Figur durch Schlangenlinien angedeutet. Wie bereits erwähnt, kann das textile Element 5 ein Gewirk, ein Gestrick, ein Filz, Vlies oder Gewebe sein. Aufgrund der elastischen Eigenschaften dieses Elements 5 kann es elastisch komprimiert werden, wobei durch Wahl geeigneter Faserelemente des textilen Elements 5 die Elastizität erhalten bleibt.

Das textile Element 5 erfährt aufgrund der Tatsache, dass der Innendurchmesser D_{I2} des zweiten röhrenförmigen Elements 3 kleiner ist als der Außendurchmesser D_{AE} .der Einheit aus erstem röhrenförmigen Element 1 und textilem Element 5 im entspannten Zustand des textilen Elements 5 eine Kompression und übt entsprechend einen radialen Druck gegen die röhrenförmigen Elemente 1, 3 aus. Neben seiner Funktion als Dämpfungselement wirkt das textile Element 5 auch als Mischer für einen im Hohlraum 4 beim Einsatz der Vorrichtung enthaltenen Elektrolyten 6. Der Elektrolyt 6, der hier als Flüssigelektrolyt, beispielsweise als wässrige Kalilauge, ausgebildet ist, kann auch die Funktion eines Kältemittels erfüllen, das über Wärmetauscher als Wärmepumpe beispielsweise den Fahrgastinnenraum eines Kraftfahrzeuges klimatisieren kann. Auf diese Weise wird die bei der chemischen Reaktion entstehende Abwärme genutzt.

Da der Elektrolyt 6 sicher im Hohlraum 4 zwischen dem ersten und dem zweiten röhrenförmigen Element 1, 3 aufgenommen ist, hat er keinen Kontakt mit den Elektroden, weswegen diese vor Korrosion geschützt sind.

Schließlich ist in der Figur noch ein drittes röhrenförmiges Element 7 gezeigt, welches das zweite röhrenförmige Element 3 unter Bildung eines weiteren Hohlraumes 8 umgibt. Analog dem ersten Hohlraum 4 kann auch der zweite Hohlraum 8 ein textiles Element 9 aufweisen. Das textile Element 9 ist hier aus Gründen der Übersichtlichkeit nur in einem Teil des zweiten Hohlraums 8 dargestellt. Tatsächlich dehnt es sich jedoch über dem gesamten Umfang des Hohlraums 8 hinweg aus. In diesem Zusammenhang ist darauf hinzuweisen, dass die im Rahmen der Anmeldung erwähnten textilen Elemente einander gleich oder ähnlich ausgebildet sein können. Somit gelten die im Zusammenhang mit dem ersten textilen Element beschriebenen Eigenschaften für die anderen textilen Elemente analog.

In dem Hohlraum 8 ist zudem aktives Elektrodenmaterial 10 enthalten, im vorliegenden Fall beispielsweise Vanadiumborid VB₂. Das aktive Elektrodenmaterial 10 ist Bestandteil einer zweiten Elektrode, die hier auch das dritte röhrenförmige Element 7 umfasst. Dieses ist im Gegensatz zu dem ersten und dem zweiten röhrenförmigen Element 1, 3 nicht aus einem Isolationsmaterial, sondern aus einem Leiter wie beispielsweise Graphit und dient der Ableitung des erzeugten Stroms nach außen. Gemäß einer alternativen Ausführungsform kann auch das dritte röhrenförmige Element 7 aus einem Isolationsmaterial hergestellt sein. In diesem Fall müsste ein zur Ableitung des Stroms geeignetes Elektrodenelement zusätzlich bereitgestellt werden, beispielsweise in Form einer Graphitbeschichtung auf dem dritten röhrenförmigen Element.

In Figur 2 ist eine alternative Ausführungsform einer tubulären Vorrichtung zur Verwendung bei der Wandlung chemischer in elektrische Energie gezeigt. In dieser Vorrichtung, die als Feststoffbatterie des Typs Luft/Vanadiumborid betrieben wird, sind die Elemente 1 bis 6 mit Ausnahme des aktiven Elements 2b analog denjenigen der Figur 2 und sollen deshalb hier nicht näher erläutert werden. Das aktive Element 2b der ersten Elektrode ist bei der hier beschriebenen Art von Batterie aus Vanadiumborid (alternativ Vanadiumbromid), wohingegen das zweite aktive Elektrodenmaterial 10 aus dem Sauerstoff der Umgebungsluft gezogen wird. Aus diesem Grund ist kein drittes röhrenförmiges Element zwingend erforderlich. Stattdessen kann auf der äußeren Oberfläche des zweiten röhrenförmigen Elements 3 eine Beschichtung 3' aus einem elektrischen Leiter, welcher einen Katalysator für eine Oxidationsreaktion enthält, vorhanden sein, welche Beschichtung einen Teil der zweiten Elektrode bildet und der Stromausbringung dient. Als Katalysator können insbesondere Materialien der 8. Nebengruppe eingesetzt werden. Anstelle einer Beschichtung 3' kann auch ein textiles Element aus einem Leiter, welcher einen Katalysator enthält, vorhanden sein.

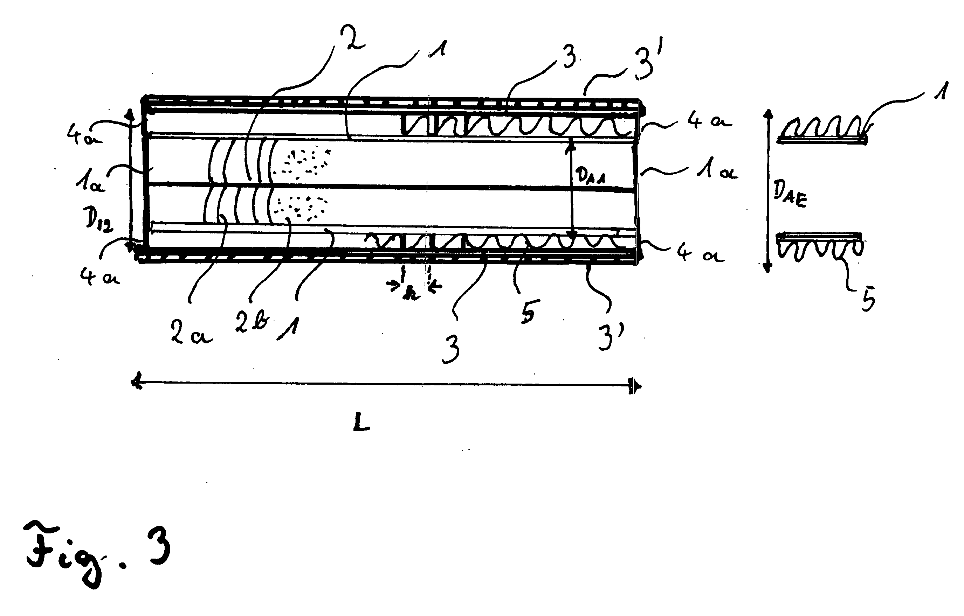

Mit nunmehrigem Bezug auf Figur 3 ist eine Längsschnittansicht eines Teils der tubulären Vorrichtung von Figur 2 gezeigt. In Figur 3 sind insbesondere die Durchmesser der einzelnen Elemente dargestellt. Die Darstellung rechts im Bild von Figur 3 zeigt einen Abschnitt eines ersten röhrenförmigen Elements 1 mit darauf aufsitzendem textilen Element 5 in entspanntem Zustand. Wie dies im Vergleich mit der linken Seite der Darstellung zu erkennen ist, ist der Innendurchmesser D_{I2} des zweiten röhrenförmigen Elements 3 kleiner als der Außendurchmesser D_{AE} der Einheit aus erstem röhrenförmigen Element 1 und textilem Element 5 im entspannten Zustand des textilen Elements 5.

Es ist anzumerken, dass aus Gründen der Deutlichkeit der Darstellung nur ein Teil der Borsten 2a des länglichen Elements 2 der inneren Elektrode dargestellt sind. Tatsächlich erstrecken sich jedoch die Borsten 2a (oder alternativ Lamellen) im Wesentlichen über die gesamte Länge L der röhrenförmigen Vorrichtung. Analoges gilt auch für das aktive Elektrodenmaterial 2b sowie das textile Element 5.

Zudem sind in der Figur die vorderen und hinteren Abschlusswände 1a, 4a des ersten geschlossenen röhrenförmigen Elements 1 und Hohlraumes 4 zwischen dem ersten und dem zweiten röhrenförmigen Element 1, 3 gezeigt. In den Abschlusswänden 1a, 4a befinden sich vorzugsweise verschließbare Öffnungen, welche dazu dienen, Zugang zum Inneren der Räume zu erhalten, um die Elektrodenmaterialien und/oder den Elektrolyten zu ersetzen oder zu regenerieren.

Aufgrund der Rohrform der Hohlräume können die darin enthaltenen Funktionselemente schnell und einfach ausgebracht und ausgetauscht werden. Im Fall der pulverförmigen wirksamen Elektrodenbestandteile kann zum Ausbringen beispielsweise ein Verfahren eingesesetzt werden, das als Pulse-Jet-Verfahren bekannt ist und in welchem ein Pulverstaubpfropfen gebildet und wie ein festes Element in Längsrichtung nach außen gedrückt wird.

Wie in der Figur zu erkennen, kann das textile Element 5 beispielsweise in Form von Ringscheiben mit der Stärke h ausgebildet sein. Bei dem textilen Element kann es sich in diesem Zusammenhang beispielsweise um einen Filz der Stärke h handeln, aus dem mittels eines Wasserstrahlschneiders eine Öffnung ausgeschnitten wird, deren Durchmesser dᵢ etwas kleiner ist als der Außendurchmesser D_{A1} des ersten röhrenförmigen Elements, so dass nach dem Überschieben des Filzes über den Außenumfang des ersten röhrenförmigen Elements ein Druck nach innen auf dieses ausgeübt wird.

## Patentansprüche

1. Tubuläre Vorrichtung zur Verwendung bei der Wandlung chemischer in elektrische Energie, aufweisend:
ein erstes röhrenförmiges, geschlossenes Element (1) aus einem Isolierstoff, in dessen Innenraum eine Elektrode aufgenommen ist,
ein zweites röhrenförmiges Element (3) aus einem Isolierstoff, wobei das zweite röhrenförmige Element (3) das erste röhrenförmige Element (1) umgibt, so dass zwischen dem ersten und dem zweiten röhrenförmigen Element (1, 3) ein geschlossener Hohlraum (4) besteht, in welchen ein textiles Element (5) eingefügt ist, das sich um den Umfang des ersten röhrenförmigen Elements (3) erstreckt, wobei der Innendurchmesser D_{I2} des zweiten röhrenförmigen Elements (3) kleiner ist als der Außendurchmesser D_{AE} der Einheit aus erstem röhrenförmigen Element (1) und textilem Element (5) im entspannten Zustand des textilen Elements (5).

2. Tubuläre Vorrichtung nach Anspruch 1, **dadurch gekennzeichnet, dass** als Isolierstoff Zirkoniumoxid eingesetzt ist.

3. Tubuläre Vorrichtung nach Anspruch 1 oder 2, **dadurch gekennzeichnet, dass** der Außendurchmesser D_{A2} des zweiten röhrenförmigen Elements (3) weniger als 10 mm beträgt.

4. Tubuläre Vorrichtung nach einem der vorstehenden Ansprüche, **dadurch gekennzeichnet, dass** die Elektrode ein längliches Element (2) umfasst, dessen Längsachse sich parallel zur Längsachse der röhrenförmigen Elemente (1, 3) erstreckt, wobei das längliche Element sich radial zu seiner Längsachse erstreckende elastische Lamellen oder Borsten (2a) aufweist, die in Druckverbindung mit dem ersten röhrenförmigen Element (1) stehen.

5. Tubuläre Vorrichtung nach Anspruch 4, **dadurch gekennzeichnet, dass** das längliche Element (2) aus mindestens einem der folgenden Materialien hergestellt ist: SiC, Titan, Reinstsilizium, das auf der Oberfläche mit bordotiertem Diamant beschichtet ist, Eisen, elektrisch leitende Polymere, Zink, Kupfer, Mangan, Kobalt, Tantal, Graphit, Kohle.

6. Tubuläre Vorrichtung nach Anspruch 4 oder 5, **dadurch gekennzeichnet, dass** die Borsten (2a) aus Hohlfasern hergestellt sind, welche einen Außendurchmesser zwischen 9 und 140 µm aufweisen.

7. Tubuläre Vorrichtung nach einem der Ansprüche 4 bis 6, **dadurch gekennzeichnet, dass** die Elektrode einen flüssigen oder einen pulverförmige Elektronenleiter (2b) umfasst, der den Innenraum des ersten röhrenförmigen Elements (1) füllt.

8. Tubuläre Vorrichtung nach Anspruch 7, **dadurch gekennzeichnet, dass** als flüssiger Elektronenleiter Vanadiumbromid VBr und der pulverförmige Elektronenleiter (2b) Vanadiumborid VB₂ ist.

9. Tubuläre Vorrichtung nach einem der vorstehenden Ansprüche, **dadurch gekennzeichnet, dass** das textile Element (5) ein Gewirk, Gestrick, Filz, Vlies oder Gewebe aus Hohlfasern ist.

10. Tubuläre Vorrichtung nach Anspruch 9, **dadurch gekennzeichnet, dass** die Hohlfasern des textilen Elements (5) einen Außendurchmesser zwischen 9 und 140µm aufweisen.

11. Tubuläre Vorrichtung nach einem der vorstehenden Ansprüche, **dadurch gekennzeichnet, dass** der Hohlraum (4) einen Elektrolyten (6) in fester oder flüssiger Form enthält.

12. Tubuläre Vorrichtung nach Anspruch 11, **dadurch gekennzeichnet, dass** der Elektrolyt eine der folgenden Verbindungen in wässriger Lösung enthält:: Kohlenstoffdisulfid (CS₂), Kalilauge, Bromide, insbesondere Lithiumbromid (LiBr), Ammoniak, Methylalkohol (CH₃OH), Tetrahydrofuran (THF).

13. Tubuläre Vorrichtung nach einem der vorstehenden Ansprüche, **dadurch gekennzeichnet, dass** ein drittes röhrenförmiges Element (7) aus einem Isolierstoff oder aus einem elektrischen Leiter vorhanden ist, wobei das dritte röhrenförmige Element (7) das zweite röhrenförmige Element (3) umgibt, so dass zwischen dem zweiten und dem dritten röhrenförmigen Element (3, 7) ein Hohlraum (8) besteht, in welchen ein textiles Element (9) eingefügt ist, das sich um den Umfang des zweiten röhrenförmigen Elements (3) erstreckt, wobei der Innendurchmesser D_{I§} des dritten röhrenförmigen Elements (7) kleiner ist als der Außendurchmesser D_{AE} .der Einheit aus dem zweiten röhrenförmigen Element (3) und textilem Element (9) im entspannten Zustand des textilen Elements (9)

14. Tubuläre Vorrichtung nach einem der vorstehenden Ansprüche, **dadurch gekennzeichnet, dass** an mindestens einem längsseitigen Ende des Innenraums des ersten röhrenförmigen geschlossenen Elements (1) eine verschließbare Öffnung ausgebildet ist, welche das Ersetzen oder das Regenerieren der Elektrode ermöglicht.

15. Tubuläre Vorrichtung nach einem der Ansprüche 11 oder 12, **dadurch gekennzeichnet, dass** an mindestens einem längsseitigen Ende des Hohlraums (4) zwischen des ersten röhrenförmigen geschlossenen Elements (1) und dem zweiten röhrenförmigen Element (3) eine verschließbare Öffnung ausgebildet ist, welche das Ersetzen oder das Regenerieren des Elektrolyten ermöglicht.

## Claims

1. Tubular apparatus for use in the conversion of chemical to electrical energy, comprising:
a first tubular, closed element (1) of an insulating material, inside which an electrode is accommodated,
a second tubular element (3) of an insulating material wherein the second tubular element (3) surrounds the first tubular element (1), so that between the first and the second tubular elements (1, 3) a closed cavity (4) exists in which a textile element (5) is inserted which extends around the periphery of the first tubular element (1), wherein the inner diameter of D_{I2} of the second tubular element (3) is smaller than the external diameter D_{AE} of the unit from the first tubular member (1) and the textile element (5) in the relaxed state of the textile element (5).

2. Tubular apparatus according to claim 1, **characterized in that** zirconia is used as the insulating material.

3. Tubular apparatus according to any of claims 1 or 2, **characterized in that** the outer diameter D_{A2} of the second tubular element (3) is less than 10 mm.

4. Tubular apparatus according to any of the preceding claims, **characterized in that** the electrode comprises an elongate element (2), the longitudinal axis of which extends in parallel to the longitudinal axis of the tubular elements (1, 3), wherein the elongate element comprises elastic blades or bristles (2a) extending radially to its longitudinal axis, which are in pressure communication with said first tubular element (1).

5. Tubular apparatus according to claim 4, **characterized in that** the elongate element (2) is made from at least one of the following materials: SiC, titanium, high-purity silicon, which is coated on the surface with boron-doped diamond, iron, electrically conductive polymers, zinc, copper, manganese, cobalt, tantalum, graphite, charcoal.

6. Tubular apparatus according to any of claims 4 or 5, **characterized in that** the bristles (2a) are made of hollow fibers which have an outside diameter between 9 and 140µm.

7. Tubular apparatus according to any of claims 4 to 6, **characterized in that** the electrode comprises a liquid or powdery electron conductor (2b), which fills the interior of the first tubular member (1).

8. Tubular apparatus according to claim 7, **characterized in that** the liquid electron conductor is vanadium bromide VBr and the powdery electron conductor (2b) is vanadium boride VB₂.

9. Tubular apparatus according to any of the preceding claims, **characterized in that** the textile element (5) is a knitted fabric, knotted fabric, felt, card web or woven fabric of hollow fibers.

10. Tubular apparatus according to claim 9, **characterized in that** the hollow fibers of the textile element (5) have an outside diameter between 9 and 140 µm.

11. Tubular apparatus according to any of the preceding claims, **characterized in that** the cavity (4) contains an electrolyte (6) in solid or liquid form

12. Tubular apparatus according to claim 11, **characterized in that** the electrolyte contains one of the following compounds in aqueous solution: carbon disulfide (CS₂), caustic potash solution, bromides, particularly lithium bromide (LiBr), ammonia, methyl alcohol (CH₃OH), tetrahydrofuran (THF).

13. Tubular apparatus according to any of the preceding claims, **characterized in that** a third tubular element (7) made of an insulating material or of an electrical conductor is present, wherein said third tubular element (7) surrounds the second tubular element (3), so that between the second and the third tubular elements (3, 7), a cavity (8) is formed, in which a textile element (9) is inserted which extends around the periphery of the second tubular element (3), wherein the inner diameter D_{I} of third tubular element (7) is smaller than the external diameter D_{AE} of the unit of the second tubular element (3) and the textile element (9) in the relaxed state of the textile element (9).

14. Tubular apparatus according to any of the preceding claims, **characterized in that** on at least one longitudinal end of the inner space of the first tubular element (1) there is formed a closable opening which allows the replacement or the regeneration of the electrode.

15. Tubular apparatus according to any of claims 11 or 12, **characterized in that** on at least one longitudinal end of the cavity (4) between the first tubular dosed element (1) and the second tubular element (3), there is formed a closable opening which allows the replacement or the regeneration of the electrolyte.

## Revendications

1. Dispositif tubulaire destiné à être utilise pour la conversion d'énergie chimique en énergie électrique, lequel présente:
un premier élément tubulaire fermé (1) constitué d'une matière isolante, dans l'espace intérieur duquel est logée une électrode;
un second élément tubulaire (3) constitué d'une matière isolante, le second élément tubulaire (3) entourant le premier élément tubulaire (1), de sorte à produire entre le premier et le second des éléments tubulaires (1, 3) un espace vide fermé (4), dans lequel un élément textile (5) est inséré qui s'étend autour de la circonférence du premier élément tubulaire (1), le diamètre intérieur D_{I2} du second élément tubulaire (3) étant plus petit que le diamètre extérieur D_{A} de l'unité constituée du premier élément tubulaire (1) et de l'élément textile (5) lorsque l'élément textile (5) est à l'état déployé.

2. Dispositif tubulaire selon la revendication 1, **caractérisé en ce que** la matière isolante est constituée de zircone.

3. Dispositif tubulaire selon l'une quelconque des revendications 1 ou 2, **caractérisé en ce que** le diamètre extérieur D_{A2} du second élément tubulaire (3) est plus petit que 10mm.

4. Dispositif tubulaire selon l'une quelconque des revendications précédents, **caractérisé en ce que** l'électrode comprend un élément oblongue (2), l'axe longitudinale duquel s'étend en parallèle à l'axe longitudinale des éléments tubulaires (1, 3), l'élément oblongue comprenant des lamelles ou soies (2a) s'étendent en radiale à son axe longitudinal et qui sont en contact à pression avec le premier élément tubulaire (1).

5. Dispositif tubulaire selon la revendication 4, **caractérisé en ce que** l'élément oblongue (2) est fabrique d'au moins un des matériaux suivants. SiC, titan, silicium à haute pureté, la surface du quelle est revêtu de diamant doté de bore, fer, polymères conducteurs électriques, zinc, cuivre, manganeux, cobalt, tantale, graphite, charbon.

6. Dispositif tubulaire selon l'une quelconque des revendications 4 ou 5, **caractérisé en ce que** les soies (2a) sont fabriqués des fibres creuses présentant un diamètre extérieur entre 9 et 140µm.

7. Dispositif tubulaire selon l'une quelconque des revendications 4 à 6, **caractérisé en ce que** l'électrode comprend un conducteur d'électrons (2b) en forme liquide ou poudreux remplissant le premier élément tubulaire (1).

8. Dispositif tubulaire selon la revendication 7, **caractérisé en ce que** le conducteur d'électrons liquide est le bromure de vanadium VBr et le conducteur d'électrons poudreux est le borure de vanadium VB₂.

9. Dispositif tubulaire selon l'une quelconque des revendications précédents, **caractérisé en ce que** élément textile (5) est un tissu à mailles, un tricot, un feutre, une toison ou un tissu de fibres creuses.

10. Dispositif tubulaire selon la revendication 9, **caractérisé en ce que** les fibres creuses de l'élément textile ont un diamètre extérieur entre 9 et 140µm.

11. Dispositif tubulaire selon l'une quelconque des revendications précédents, **caractérisé en ce que** l'espace vide (4) contient un électrolyte (6) en forme solide ou liquide.

12. Dispositif tubulaire selon la revendication 11, **caractérisé en ce que** l'électrolyte comprend un des composés suivants en solution aqueuse: le sulfure de carbone (CS₂), l'hydrate de potassium, les bromures, en particulier le bromure de lithium (LiBr), l'ammoniac, le méthanol (CH₃OH), le tétreahydrofurane (THF).

13. Dispositif tubulaire selon l'une quelconque des revendications précédents, **caractérisé en ce qu'**il y est un troisième élément tubulaire (7) en matière isolante ou en matière conducteur d'électricité, le troisième élément tubulaire (7) entourant le second élément tubulaire (3), de sorte à produire entre le second et le troisième des éléments tubulaires (3, 7) un espace vide (8) dans lequel un élément textile (9) est inséré, qui se déborde autour de la circonférence du second élément tubulaire (3), le diamètre intérieur D_{I3} du troisième élément tubulaire (7) étant plus petit que le diamètre extérieur D_{AE} de l'unité constituée du second élément tubulaire (3) et de l'élément textile (9) lorsque l'élément textile (9) est à l'état déployé.

14. Dispositif tubulaire selon l'une quelconque des revendications précédents, **caractérisé en ce qu'**une aperture fermable est formée sur l'au moins une des extrémités longitudinales du premier élément tubulaire fermé (1), l'aperture fermable permettant le remplacement ou la régénération de l'électrode.

15. Dispositif tubulaire selon l'une quelconque des revendications 11 ou 12, **caractérisé en ce qu'**une aperture fermable est formée sur l'au moins une des extrémités longitudinales de l'espace vide (4) entre le premier élément tubulaire fermé (1) et le second élément tubulaire (3), l'aperture fermable permettant le remplacement ou la régénération de l'électrolyte,
